# FASCICULE DE BREVET EUROPEEN

(11) **EP 1 382 990 B1**
(45) Date de publication et mention de la délivrance du brevet: **04.01.2006**
(21) Numéro de dépôt: 02016010.7
(22) Date de dépôt: 18.07.2002
(51) Int. Cl.: G02C 13/00

(54) **Machine de nettoyage de verres de lunettes ou autres pièces similaires**
Reinigungsmaschine für Brillenlinsen oder dergleichen
Cleaning machine for spectacle lenses or the like

(43) Date de publication de la demande: 21.01.2004
(73) Titulaire: SPECIAL COATING LABORATORY INTERNATIONAL (S.C.L. INTERNATIONAL) S.A.R.L., 74160 Archamps (FR)
(72) Inventeur: Gehrig,Jean, 74580 Viry (FR); Gehrig,Denis, 74160 St.Julien en Genevois (FR)
(74) Mandataire: Arbousse-Bastide, Jean-Claude Ph.

(56) Documents cités:
- WO-A-00/18568
- US-A- 5 143 101
- US-A- 5 453 132
- US-A- 5 462 673
- US-A- 5 794 635

## Description

La présente invention a pour objet une machine de nettoyage de verres de lunettes ou autres pièces similaires.

On connaît déjà des machines de nettoyage de verres de lunettes constituées d'un transporteur comportant une surface porteuse desdits verres continue qui passe dans un tunnel formé d'une succession de moyens de lavage tels que des brosses rotatives, des moyens de pulvérisation de liquides de lavage, solvants acides ou basiques, des moyens de rinçage et des moyens de séchage. La surface porteuse est orientée dans un plan horizontal et l'effort de traction lui est transmis par deux chaînes à maillons sans fin, situées de part et d'autre de ladite surface, tendues chacune, parallèlement à cette dernière, entre deux roues d'entraînement d'axe horizontal et perpendiculaire au sens de déplacement de ladite surface porteuse.

Toutefois, les maillons des chaînes retiennent les eaux de lavages et il s'ensuit une perte de liquide importante, jusqu'à 30 %, très coûteuse.

La présente invention a pour but de remédier à ces inconvénients en proposant une machine de nettoyage de pièces en matière organique ou autres et plus particulièrement des verres de lunettes évitant la perte des liquides de nettoyage. Des autres systèmes de nettoyage de verres de lunettes sont connus de WO 00/18568, US 5 143 101, ou US 5 794 635.

La machine de nettoyage de verres de lunettes selon la présente invention est du type comprenant un transporteur comportant une surface porteuse desdits verres continue susceptible de passer dans un tunnel de lavage formé d'une succession de moyens de lavage, l'effort de traction transmis à ladite surface porteuse étant effectué grâce à deux chaînes à maillons sans fin, situées de part et d'autre de ladite surface porteuse, chaque chaîne étant solidarisée au côté longitudinal correspondant de ladite surface porteuse et est tendue entre deux roues d'entraînement, d'axe parallèle au plan de ladite surface porteuse et perpendiculaire au sens de déplacement de cette dernière, et se caractérise essentiellement en ce qu'elle comprend d'une part deux profilés abritant chacun l'une des deux chaînes et en ce que lesdits profilés comportent une ouverture longitudinale permettant la solidarisation de la surface porteuse auxdites chaînes logées dans lesdits profilés et d'autre part des patins d'étanchéité solidarisés à la surface porteuse de manière à fermer ladite ouverture longitudinale pratiquée dans chaque profilé, lesquels patins étant montés coulissant parallèlement au sens de déplacement de ladite surface porteuse grâce à des moyens de guidage.

Les profilés auront une section de forme globalement carré ou arrondie et l'une des faces, perpendiculaire au plan de la surface porteuse, sera ouverte pour permettre la solidarisation des côtés longitudinaux de ladite surface porteuse aux chaînes correspondantes. D'autre part, les patins seront montés coulissant axialement sur des glissières solidarisées aux profilés.

Dans un mode de réalisation préférentiel des profilés selon la présente invention les bords longitudinaux supérieur et inférieur des faces ouvertes des profilés seront inclinés l'un vers l'autre et chaque bord longitudinal inférieur comportera, solidarisé à sa face interne, une glissières de section carrée ou arrondie en sorte que la surface de glissement des patins présentera une forme en V ou arrondie. Les patins pourront comporter à l'un de leurs bords longitudinaux une rainure longitudinale en V complémentaire de la surface de glissement. L'autre bord longitudinal des patins pourra être biseauté en V pour être inséré dans une rainure formée par exemple par l'espace créé entre le bord longitudinal incliné supérieur de la face interne des profilés et une pièce de section carrée ou ronde solidarisée à la face interne du bord incliné supérieur en retrait de ce dernier et parallèlement aux glissières.

Conformément à l'invention chaque profilé sera discontinu et composé d'éléments espacés entre eux d'une certaine distance de manière à permettre, par leurs extrémités libres ouvertes, l'écoulement des eaux résiduelles de lavage qui s'accumuleraient dans ledit profilé, dans des chambres de récupération situées sous les éléments constitutifs desdits profilés.

La jonction entre deux chambres contigües sera située sensiblement dans le plan médian de l'espace séparant deux éléments successifs d'un profilé et le fond d'une chambre présentera de préférence une section longitudinale en forme de V de manière à permettre l'acheminement des eaux résiduelles s'écoulant des extrémités libres d'un élément de profilé dans ladite chambre jusque vers une entrée d'un conduit de retour desdites eaux résiduelles à une cuve de rétention qui sera disposé au niveau de la base dudit V.

Les avantages et les caractéristiques de la présente invention ressortiront plus clairement de la description qui suit et qui se rapporte au dessin annexé, lequel en représente un mode de réalisation non limitatif.
- la figure 1 représente une vue en perspective de la face avant d'une machine de nettoyage selon la présente invention.
- la figure 2 représente une vue en perspective de la face arrière de la machine.
- la figure 3 représente une vue en coupe transversale de la machine selon la présente invention.
- la figure 4 représente une vue de profil d'un patin de la machine selon la présente invention.
- la figure 5 représente une vue de face du patin de la figure 4.
- la figure 6 représente une vue en coupe longitudinale partielle de la machine.
- la figure 7 représente une vue en coupe de dessus d'un dispositif de maintien des verres de lunettes sur la surface porteuse.

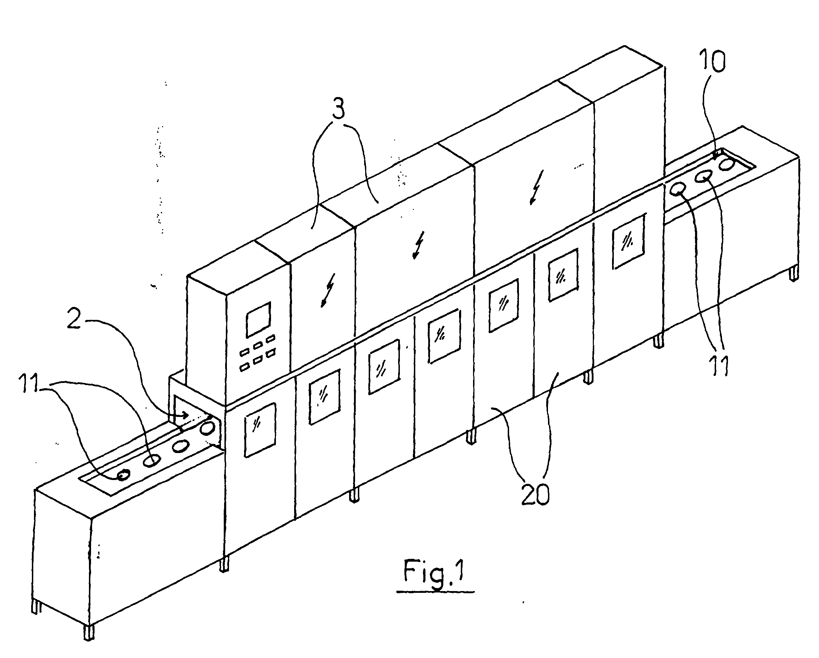

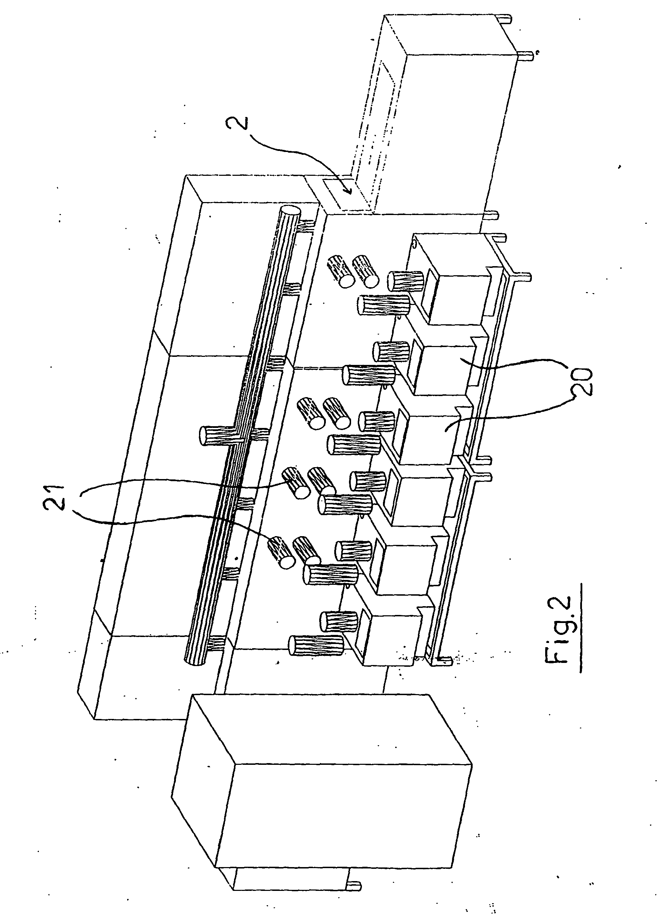

Si on se réfère à la figure 1 et à la figure 2 on peut voir qu'une machine selon la présente invention est constituée d'une part d'un transporteur 1 comprenant une surface porteuse 10 de verres de lunettes 11 ou de substrats quelconques à nettoyer située dans un plan horizontal et d'autre part d'un tunnel de lavage 2 formé par une succession de postes de lavage 20, lequel tunnel 2 étant traversé par le transporteur 1 et des moyens de contrôle et de commande 3 de la machine.

Les postes de lavage 20 comprennent des brosses de lavage rotatives 21 motorisées et des moyens, non représentés, permettant la projection de liquides de lavage, solvants acides ou basiques, et de liquides de rinçage ainsi que des moyens de séchage.

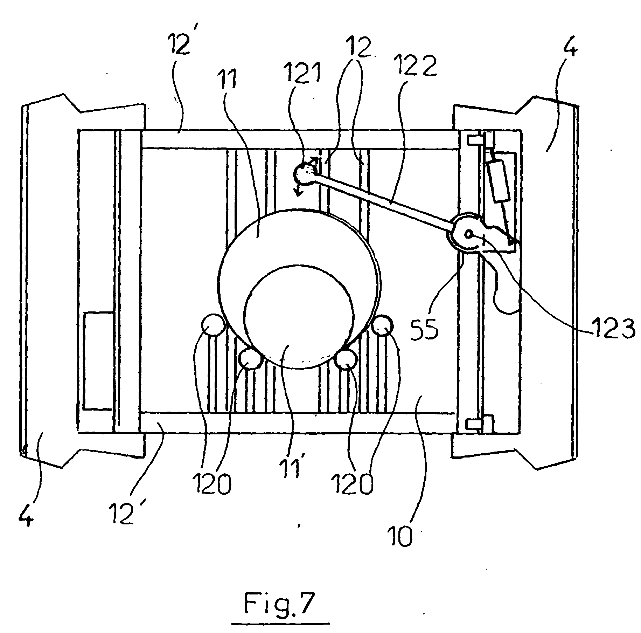

Si on se réfère maintenant à la figure 7 on peut voir qu'un verre de lunette 11 est disposé sur des barres supports longitudinales 12 solidarisées entre deux axes support transversaux 12' et maintenu en position entre des butées fixes 120 et une butée mobile 121 solidarisée à l'extrémité libre d'un bras 122 monté en pivotement autour d'un axe 123 vertical, permettant de maintenir des verres de lunettes 11,11' de dimensions différentes.

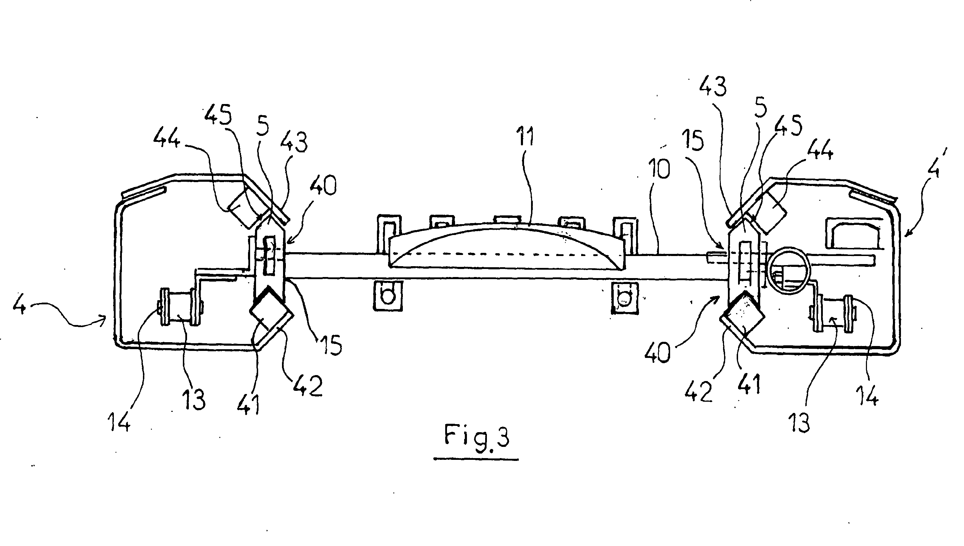

On peut voir également à la figure 3 que la surface porteuse 10 est rendue mobile grâce à deux chaînes sans fin 13 à maillons 14 solidarisées parallèlement à la surface porteuse 10, de part et d'autre de cette dernière, tendues chacune entre deux roues d'entraînement dentées, non représentées, d'axe horizontal perpendiculaire au sens de déplacement F de la surface porteuse 10.

Les deux chaînes 13 destinées à transmettre l'effort de traction à la surface porteuse 10 sont disposées chacune dans un profilé 4 de section globalement carrée et ouvert à sa face longitudinale interne 40,40' de manière à permettre la solidarisation de la surface porteuse 10 par ses bords longitudinaux 15 aux chaînes 13, lequel profilé 4 est muni d'une glissière 41 de section carrée solidarisée au bord incliné inférieur 42 de la face longitudinale interne 40 du profilé 4 parallèlement à ce dernier.

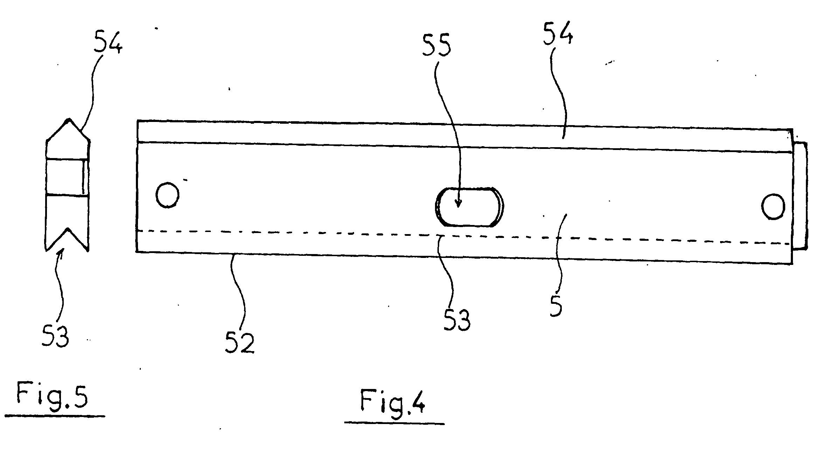

La face interne ouverte 40 des profilés 4 est fermée avec une étanchéité relative aux eaux de lavage grâce à des patins 5 de forme rectangulaire, comme on peut le voir sur la figure 4, solidarisés d'une part les uns aux autres par emboîtement de leurs extrémités libre 50,51 et d'autre part à la surface porteuse 10 perpendiculairement à cette dernière au moyen de vis 16 vissés dans les axes support transversaux 12'.

Les patins 5 sont guidés en coulissement axial, parallèlement au sens de déplacement F de la surface porteuse 10, grâce aux glissières 41. A cet effet, les patins 5 sont munis à l'un de leurs bords longitudinaux 52 d'une rainure longitudinale 53 de forme complémentaire à la surface de glissement des glissières 41,41' pour leur guidage en coulissement axial.

La surface de glissement des patins 5 est formée par la partie angulaire de l'un des bords des glissières de section carrée.

D'autre part, on peut voir que l'autre bord longitudinal 54 des patins 5 est biseauté en V et destiné à être inséré dans une rainure 45 formée par l'espace créé entre le bord incliné supérieur respectivement 43 de la face interne 40 des profilés 4 et une pièce 44 solidarisée à la face interne du bord incliné supérieur 43, parallèlement à la surface porteuse 10, en retrait de ce dernier.

Si on se réfère également à la figure 7 on peut voir que les patins 5 sont munis d'une ouverture transversale 55 destinée à recevoir l'axe de rotation 123 du bras 122 portant à son extrémité libre la butée mobile 121 qui permet le maintien des verres de lunettes 11 sur la surface porteuse 10 avec les butées fixes 120.

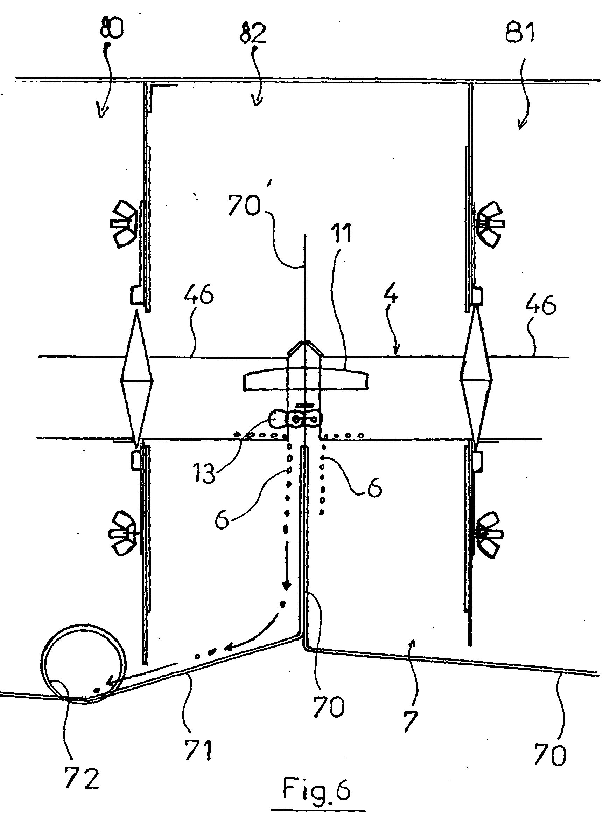

Les profilés 4 sont discontinus comme on peut le voir sur la figure 6 et sont constitués d'éléments 46 espacés d'une certaine distance entre eux, par exemple de l'ordre de 20 mm, ouverts à leurs extrémités libres de manière que les eaux résiduelles 6 qui s'accumulent dans le fond des profilés 4 puissent s'écouler par leurs extrémités, par gravité, dans des chambres 7 situées sous les profilés 4. La jonction 70 entre deux chambres contiguës est située sensiblement dans le plan médian 70' de l'espace séparant deux éléments 46 successifs d'un profilé 4.

On peut voir également que les chambres 7 comportent un fond incliné 71 de section longitudinale en forme de V permettant d'acheminer les eaux résiduelles 6 vers l'entrée d'un tuyau 72 permettant de conduire les eaux résiduelles 6 vers la cuve de rétention correspondante, non représentée.

On peut voir également sur la figure 6 deux chambres de lavage 80,81 et entre celles-ci un sas de liaison 82 des chambres de lavage 80,81. La séparation entre les deux éléments 46 d'un profilé 4 est située dans le sas de liaison.

Les profilés 4 ont pour fonction de protéger les chaînes 13 des projections des eaux de lavage ce qui évite une perte importante des eaux de lavage par entraînement entre les maillons des chaînes. En effet, chaque maillon représente un volume captif susceptible d'entraîner les différents liquides de lavage. Dans les machines connues actuellement, ces volumes captifs provoquent une perte importante des liquides de lavage ainsi qu'un mélange de ceux-ci. Les liquides de lavage sont donc déconcentrés et déstabilisés créant des pollutions sur les substrats tels que les verres optiques. En outre ces déconcentrations et déstabilisations impliquent des rajouts conséquents et fréquents dans les cuves de réserves des liquides de lavage d'où un coût d'exploitation élevé et une inefficacité du lavage du fait de la pollution restant sur les substrats.

Les profilés 4 permettent donc d'éviter les entraînement de liquide de lavage par les chaînes 13 et, dans le cas où des eaux résiduelles s'accumuleraient dans les profilés 4, la discontinuité de ceux-ci dans les SAS de liaison 82 permet aux liquides résiduels grâce aux chambres 7 et aux tuyaux 72 de retourner à leurs réserves respectives.

On notera que la forme de la glissière de section carrée ou la forme des patins rectangulaires pourrait aussi sans sortir du cadre de la présente invention être ronde.

## Revendications

1. Machine de nettoyage de verres de lunettes (11,11') ou autres pièces similaires du type comprenant un transporteur (1) comportant une surface porteuse (10) desdits verres (11,11') continue susceptible de passer un tunnel de lavage (12) formé d'une succession de moyens de lavage (21), l'effort de traction transmis à ladite surface porteuse (10) étant effectué grâce à deux chaînes (13) à maillons (14) sans fin, situées de part et d'autre de ladite surface porteuse (10), chaque chaîne (13) étant solidarisée au côté longitudinal correspondant de ladite surface porteuse (10) et est tendue entre deux roues d'entraînement, d'axe parallèle au plan de ladite surface porteuse et perpendiculaire au sens de déplacement de cette dernière **caractérisée en ce qu'**elle comprend d'une part deux profilés (4) abritant chacun l'une des deux chaînes et **en ce que** lesdits profilés (4) comportent une ouverture longitudinale (40) permettant la solidarisation de la surface porteuse (10) auxdites chaînes (13) logées dans lesdits profilés (4) et d'autre part des patins (5) d'étanchéité solidarisés à la surface porteuse (10) de manière à fermer ladite ouverture longitudinale pratiquée dans chaque profilé (4), lesquels patins (5) étant montés coulissant parallèlement au sens de déplacement de ladite surface porteuse (10) grâce à des moyens de guidage (41,44,43).

2. Machine selon la revendication 1 **caractérisée en ce que** les profilés (4) ont une section de forme globalement carré ou arrondie et **en ce que** l'une (40) des faces, perpendiculaire au plan de la surface porteuse (10), est ouverte pour permettre la solidarisation des côtés longitudinaux (15) de ladite surface porteuse (10) aux chaînes (13) correspondantes et **en ce que** les patins (5) sont montés coulissant axiale ment sur des glissières solidarisés auxdits profilés (4).

3. Machine selon la revendication 2 **caractérisée en ce que** les bords longitudinaux supérieur (43) et inférieur (42) des faces ouvertes (40) des profilés (4) sont inclinés l'un vers l'autre et **en ce que** chaque bord longitudinal inférieur (42) comporte, solidarisé à sa face interne, une glissière (41) de section carrée ou arrondie en sorte que la surface de glissement des patins présente une forme en V ou arrondie et **en ce que** les patins comportent à l'un (52) de leurs bords longitudinaux une rainure longitudinale (53) en V ou arrondie complémentaire de la surface de glissement.

4. Machine selon la revendication 3 **caractérisée en ce que** l'autre bord longitudinal des patins (5) est biseauté en V et destiné à être inséré dans une rainure (45) formée par l'espace créé entre le bord longitudinal incliné supérieur (43) de la face interne (40) des profilés (4) et une pièce (44) de section carrée ou ronde solidarisée à la face interne du bord incliné supérieur (43) en retrait de ce dernier et parallèlement aux glissières (41).

5. Machine selon l'une quelconque des revendications précédentes **caractérisée en ce que** les patins (5) sont solidarisés entre eux par emboîtement de leurs extrémités libres.

6. Machine selon l'une quelconque des revendications précédentes **caractérisée en ce que** les verres de lunettes (11,11') transportés par la surface porteuse (10) sont maintenus en position sur ladite surface porteuse (10) entre des butées fixes (120) et une butée mobile (121) solidarisée à l'extrémité libre d'un bras (122) monté pivotant autour d'un axe (123) perpendiculaire à ladite surface porteuse (10) et **en ce que** les patins (5) comportent une ouverture transversale (55) destinée à recevoir ledit axe de pivotement (123).

7. Machine selon l'une quelconque des revendications précédentes **caractérisée en ce que** les patins (5) sont solidarisés à la surface porteuse (10) au moyen de vis.

8. Machine selon l'une quelconque des revendications 2 à 7 **caractérisée en ce que** chaque profilé (4) est composé de plusieurs éléments (46) espacés entre eux d'une certaine distance de manière à permettre, par leurs extrémités libres ouvertes (47), l'écoulement des eaux résiduelles de lavage (6) qui s'accumulent dans ledit profilé (4), dans les chambres de récupération (7) situées sous lesdits éléments (46).

9. Machine selon la revendication 7 **caractérisée en ce que** la jonction (70) entre deux chambres (7) contiguës est située sensiblement dans le plan médian (70') de l'espace séparant deux éléments (46) successifs d'un profilé (4) et **en ce que** le fond (71) d'une chambre (7) présente une section longitudinale en forme de V de manière à permettre l'acheminement des eaux résiduelles s'écoulant des extrémités libres ouvertes (47) d'un élément (46) d'un profilé (4) dans ladite chambre (7) jusque vers une entrée d'un conduit de retour (72) desdites eaux résiduelles à une cuve de rétention.

## Patentansprüche

1. Reinigungsmaschine von Brillengläsern (11,11') oder anderen ähnlichen Teilen des Typs mit einem Förderer (1), der eine kontinuierliche Tragfläche (10) der Gläser (11,11') aufweist, die dazu geeignet ist, durch einen Waschtunnel (12) zu laufen, der aus einer Folge von Waschmitteln (21) gebildet ist, wobei die Zugkraft, die der Tragfläche (10) übertragen wird, anhand von zwei endlosen Ketten (13) mit Gliedern (14) erfolgt, die sich beiderseitig von der Tragfläche (10) befinden, wobei jede Kette (13) an der Längsseite, die der Tragfläche (10) entspricht, verbunden ist, und zwischen zwei Antriebsrädern gespannt ist, deren Achse parallel zur Ebene der Tragfläche und senkrecht zu deren Verschiebungsrichtung ist, **dadurch gekennzeichnet, dass** sie einerseits zwei Profile (4) umfasst, die jeweils die eine der beiden Ketten aufnehmen und **dadurch gekennzeichnet, dass** die Profile (4) eine Längsöffnung (40) aufweisen, die die Verbindung der Tragfläche (10) mit den Ketten (13) ermöglicht, die in den Profilen (4) untergebracht sind, und dass sie andererseits Dichtungsplatten umfasst, die derart mit der Tragfläche (10) verbunden sind, dass sie die Längsöffnung schließen, die in jedem Profil (4) hergestellt ist, wobei die Platten (5) verschiebbar parallel zur Verschiebungsrichtung der Tragfläche (10) anhand von Führungsmittel (41, 44, 43) montiert sind.

2. Maschine nach Anspruch 1, **dadurch gekennzeichnet, dass** die Profile (4) einen Querschnitt mit einer im ganzen genommen quadratischen oder abgerundeten Form aufweisen und **dadurch gekennzeichnet, dass** die eine (40) der Flächen, senkrecht zur Ebene der Tragfläche (10), offen ist, um die Verbindung der Längsseiten (15) der Tragfläche (10) mit den entsprechenden Ketten (13) zu erlauben und **dadurch gekennzeichnet, dass** die Platten (5) axial verschiebbar auf Gleitflächen, die mit den Profilen (4) verbunden sind, montiert sind.

3. Maschine nach Anspruch 2, **dadurch gekennzeichnet, dass** sich der obere (43) und der untere (42) Längsrand der offenen Flächen (40) der Profile (4) aufeinander zuneigen, und **dadurch gekennzeichnet, dass** jeder untere Längsrand (42) mit seiner internen Fläche verbunden, derart eine Gleitfläche (41) mit quadratischem oder abgerundeten Querschnitt aufweist, dass die Gleitfläche der Platten eine V-förmige oder abgerundete Form aufweist, und **dadurch gekennzeichnet, dass** die Platten an dem einen (52) ihrer Längsränder eine V-förmige oder abgerundete Längsrille (53) aufweisen, die komplementär zur Gleitfläche ist.

4. Maschine nach Anspruch 3 **dadurch gekennzeichnet, dass** der andere Längsrand der Platten (5) V-förmig geschliffen ist und dazu bestimmt ist, in eine Rille (45) eingeführt zu werden, die durch den Zwischenraum gebildet wird, der entstanden ist zwischen dem oberen geneigten Längsrand (43) der internen Fläche (40) der Profile (4) und einem Teil (44) mit quadratischem oder rundem Querschnitt, der verbunden ist mit der internen Fläche des oberen geneigten Randes (43), zurückgesetzt zu diesem und parallel zu den Gleitflächen (41).

5. Maschine nach einem der vorhergehenden Ansprüche, **dadurch gekennzeichnet, dass** die Platten (5) durch Ineinanderstecken ihrer freien Enden miteinander verbunden sind.

6. Maschine nach einem der vorhergehenden Ansprüche, **dadurch gekennzeichnet, dass** die Brillengläser (11,11'), die von der Tragfläche (10) transportiert werden, auf der Tragfläche (10) in Position gehalten werden zwischen den Festanschlägen (120) und einem beweglichen Anschlag (121), der mit dem freien Ende eines Arms (122) verbunden ist, der schwenkbar um eine Achse (123) senkrecht zur Tragfläche (10) montiert ist, und **dadurch gekennzeichnet, dass** die Platten (5) eine Queröffnung (55) aufweisen, die dazu bestimmt ist, die Schwenkachse (123) aufzunehmen.

7. Maschine nach einem der vorhergehenden Ansprüche, **dadurch gekennzeichnet, dass** die Platten (5) anhand von Schrauben mit der Tragfläche (10) verbunden sind.

8. Maschine nach einem der Ansprüche 2 bis 7, **dadurch gekennzeichnet, dass** sich jedes Profil (4) aus mehreren Elementen (46) zusammen setzt, die derart mit einem bestimmten Abstand auseinander liegen, dass sie durch ihre offenen freien Enden (47) den Abfluss des Waschabwassers (6), das sich im Profil (4) in den Auffangkammern (7), die sich unter den Elementen (46) befinden, ansammelt, ermöglichen.

9. Maschine nach Anspruch 7 **dadurch gekennzeichnet, dass** sich die Verbindung (70) zwischen zwei benachbarten Kammern (7) leicht in der Mittelebene (70') des Zwischenraums befindet, der zwei aufeinander folgende Elemente (46) eines Profils (4) trennt und **dadurch gekennzeichnet, dass** der Boden (71) einer Kammer (7) derart einen V-förmigen longitudinalen Querschnitt aufweist, dass die Weiterleitung des abfließenden Abwassers aus den offen freien Enden (47) eines Elementes (46) eines Profils (4) in die Kammer (7) bis zu einem Eingang einer Rückleitung (72) des Abwassers in einen Rückhaltebehälter möglich ist.

## Claims

1. Machine for cleaning spectacle glasses (11, 11') or other similar parts of the type including a carrier (1) with a continuous bearing surface (10) for the said glasses (11, 11') that can pass a washing tunnel (12) made up of a succession of washing means (21), the pulling force transmitted to the said bearing surface (10) being applied by two continuous chains (13) with links (14) located on either side of the said bearing surface (10), each chain (13) being joined to the corresponding longitudinal side of the said bearing surface (10) and tensioned between two driving wheels with a centre line parallel to the surface of the said bearing surface and perpendicular to the direction of movement of that surface, **characterised in that** it includes (a) two sections (4), each containing one of the two chains and **in that** each of the said sections (4) have a longitudinal opening (40) to join the bearing surface (10) to the said chains (13) housed in the said sections (4) and (b) sealing plates (5) joined to the bearing surface (10) so as to close the said longitudinal opening made in each section (4), the plates (5) being fitted so they slide parallel to the direction of movement of the said bearing surface (10) with guiding means (41, 44, 43).

2. Machine according to claim 1 **characterised in that** the sections (4) have a section with a shape that is generally square or rounded and that one (40) of the sides, perpendicular to the plane of the bearing surface (10) is open to enable the joining of the longitudinal sides (15) of the said bearing surface (10) to the corresponding chains (13) and that the plates (5) are fitted so they slide axially on slides joined to the said sections (4).

3. Machine according to claim 2 **characterised in that** the upper (43) and lower (42) longitudinal edges of the open sides (40) of the sections (4) are tilted towards each other and **in that** each lower longitudinal edge (42) includes a slide (41) with a square or rounded section joined to its inner side, so that sliding surface of the plates has a V or rounded shaped and that the plates have a V-shaped or rounded longitudinal groove (53) that is complementary to the sliding surface on one (53) of their longitudinal edges.

4. Machine according to claim 3 **characterised in that** the other longitudinal edge of the plates (5) has a V-shaped bevel and is designed to be inserted in a groove (45) formed by the space created between the upper tilted longitudinal edge (43) of the internal side (40) of the sections (4) and a part (44) with a square or round section joined to the inner side of the tilted upper edge (43) behind the edge and parallel to the slides (41).

5. Machine according to any of the previous claims **characterised in that** the plates (5) are joined to each other by fitting their free ends.

6. Machine according to any of the previous claims **characterised in that** the spectacle glasses (11,11') carried by the bearing surface (10) are held in position on the said bearing surface (10) between fixed stops (120) and a moving stop (121) joined at the free end of an arm (122) mounted so that it pivots around a shaft (123) perpendicular to the said bearing surface (10) and **in that** the plates (5) have a transverse opening (55) designed to accommodate the said pivoting shaft (123).

7. Machine according to any of the previous claims **characterised in that** the plates (5) are joined to the bearing surface (10) with screws.

8. Machine according to any of the claims 2 to 7, **characterised in that** each section (4) is made up of several elements (46) spaced from each other by a certain distance so as to enable the flow of residual washing water (6) that accumulates in the said section (4) through their open free ends (47) into collection chambers (7) located under the said elements (46).

9. Machine according to claim 7 **characterised in that** the join (70) between two contiguous chambers (7) is located more or less in the median plane (70') of the space dividing two successive elements (46) of a section (4) and **in that** the bottom (71) of a chamber (7) has a V-shaped longitudinal section so as to enable the passage of residual water flowing from the open free ends (47) of an element (46) of a section (4) in the said chamber (7) up to the entry of a conduit (72) through which the said residual water goes to a retention tank.
